# EUROPÄISCHE PATENTSCHRIFT

(11) **EP 1 473 801 B1**
(45) Veröffentlichungstag und Bekanntmachung des Hinweises auf die Patenterteilung: **26.07.2006**
(21) Anmeldenummer: 04010086.9
(22) Anmeldetag: 28.04.2004
(51) Int. Cl.: H01R 9/03, H02G 15/10

(54) **Kabelabzweigklemme für Energieversorgungskabel**
Cable tapping clamp for a power-supply cable
Borne de dérivation pour un câble d'alimentation électrique

(30) Priorität: 30.04.2003 DE 10319542
(43) Veröffentlichungstag der Anmeldung: 03.11.2004
(73) Patentinhaber: ESV GmbH, 96472 Rödental (DE)
(72) Erfinder: Gänslein, Hans-Günther, 96472 Rödental (DE)
(74) Vertreter: Reinhard - Skuhra - Weise & Partner

(56) Entgegenhaltungen:
- EP-A- 0 666 615
- EP-A- 0 923 160
- DE-A- 19 727 567
- DE-B- 1 765 242

## Beschreibung

Die Erfindung betrifft eine Kabelabzweigklemme gemäß dem Oberbegriff des Patentanspruchs 1.

Eine Kabelabzweigklemme entsprechend dem Oberbegriff des Patentanspruchs 1 ist aus der EP-A-0923160 bekannt. Diese Kabelabzweigklemme besteht aus einer zweiteiligen Muffenschale, innerhalb welcher Klemmringe aufgenommen werden, die durch eine Spannringverschraubung unter Einschuss der Hauptadern verschraubt werden. Durch das Verschrauben der Klemmringe wird die Hauptader durch Kontaktspitzen elektrisch kontaktiert. Zur Verpressung der Abzweigadern sind in jeder Abzweigklemme Kontaktierschrauben angeordnet.

In der EP-A-0666615 ist eine Abzweigklemme beschrieben, die zwei Muffenhalbschalen aufweist. Etwa mittig der Muffenhalbschalen sind Abzweigklemmen vorgesehen, die in Kontaktschneiden verlängert sind zur Kontaktierung der Hauptadern. Hierbei sind die Abzweigklemmen innerhalb von Anlageflächen angeordnet. Bei dieser Abzweigklemme sind die elektrischen Kontakte gegenüber den Hauptadern und den Abzweigkabeln herzustellen, bevor die Muffenhalbschalen aufgesetzt und unter Einschuss von Dichtungsmasse zusammengesetzt und verschraubt werden können.

In der DE-1765242 ist eine Abzweigklemme beschrieben, die in die Hauptader einschiebbare Zähne aufweist. Der Klemmenkörper ist durch zwei Klemmenhälften gebildet, die unter Einschließung der Hauptader verschraubbar sind.

Abzweigklemmen zum Abnehmen von Strom von Energieversorgungskabeln sind bereits in diversen Ausführungsformen bekannt. Sämtliche bisher bekannten Abzweigklemmen sind jedoch so ausgelegt, dass das Anbringen eines Abzweigleiters entweder nicht ohne Abschalten der Spannung erfolgen kann oder nur unter der Voraussetzung, dass die Person, die den Abzweigleiter anbringt, eine aufwendige persönliche Schutzausrüstung bei Arbeiten unter Spannung zuvor abgeschaltet werden muss, seien die Veröffentlichungen DE 4405964 C1, DE 20020084 U1 oder DE 19539184 C3 genannt.

Aus der DE 37 15 529 ist weiterhin eine Abzweigklemme bekannt, die aus zwei Gehäuseteilen besteht mit Kontaktierelementen in Form von zahnartigen Elementen, die nach dem Zusammenschrauben der Gehäusehälften durch die Isolierung der betreffenden Leiter durchgehen und eine elektrische Kontaktierung ermöglichen. Bei dieser Abzweigklemme verlaufen die Schraubmittel mittig und zwischen den zu kontaktierenden Leitern, weshalb diese Abzweigklemme ausschließlich dann verwendbar ist, wenn das Hauptkabel aus zwei Leitern besteht, die eine mittige Durchführung der Schraubmittel ermöglichen.

Das Arbeiten mit einer persönlichen Schutzausrüstung ist einerseits mit einem erhöhten Zeitaufwand für das Anlegen der Schutzausrüstung verbunden, und andererseits mit einer Einschränkung der Bewegungsfreiheit der die persönliche Schutzausrüstung tragenden Person. Zudem entstehen auf Seiten der Firmen, die Arbeiten unter Spannung vornehmen müssen, erhöhte Kosten für die Anschaffung solcher persönlicher Schutzausrüstungen.

Es ist daher Aufgabe der vorliegenden Erfindung, eine solche Vorrichtung bereitzustellen, sowie ein Verfahren zum Abnehmen von Strom unter Spannung.

Diese Aufgabe wird durch eine Abzweigklemme gemäß Anspruch 1 gelöst.

Wesentlich für die vorliegende Erfindung ist, dass das zweiteilige Führungsgehäuse so ausgelegt ist, dass die beiden Teile des Führungsgehäuses zunächst nur bis zu einem definierten Abstand zusammenfügbar sind, so dass bei Einhaltung dieses Abstands keine Kontaktierung einer der Adern des Energieversorgungskabels erfolgt. Dadurch kann ohne persönliche Schutzausrüstung und ohne vorangehende Abisolierung von Hauptkabeln zunächst per Hand das Führungsgehäuse durch Zusammenfügung der beiden Teile des Führungsgehäuses derart zusammengefügt werden, dass in den Teilen des Führungsgehäuses befindliche Kontaktkörper die Isolierung der Adern des Energieversorgungskabels nicht durchdringen, also kein Kontakt hergestellt wird.

Erst nachdem das Führungsgehäuse erfindungsgemäß aufgebracht ist, werden die zwei Teile des Muffengehäuses aufgesetzt und derart miteinander verschraubt oder befestigt, dass der zunächst vorgegebene Mindestabstand verringert wird. Dadurch können die Kontaktierelemente, vorzugsweise Kontaktschneiden, der Kontaktierkörper die Isolierungen der Adern des Energieversorgungskabels durchdringen und einen elektrischen Kontakt zu den Leitern des Hauptkabels herstellen. Eine Kontaktierung der unter Spannung stehenden Hauptleiter erfolgt erfindungsgemäß also erst dann, wenn die isolierenden Muffengehäuseteile aufgesetzt sind, so dass die Person, die den Abzweigleiter anbringt, keiner Gefahr einer Stromeinwirkung bzw. einer Kontaktierung ausgesetzt ist. Dadurch kann auf eine persönliche Schutzausrüstung verzichtet werden.

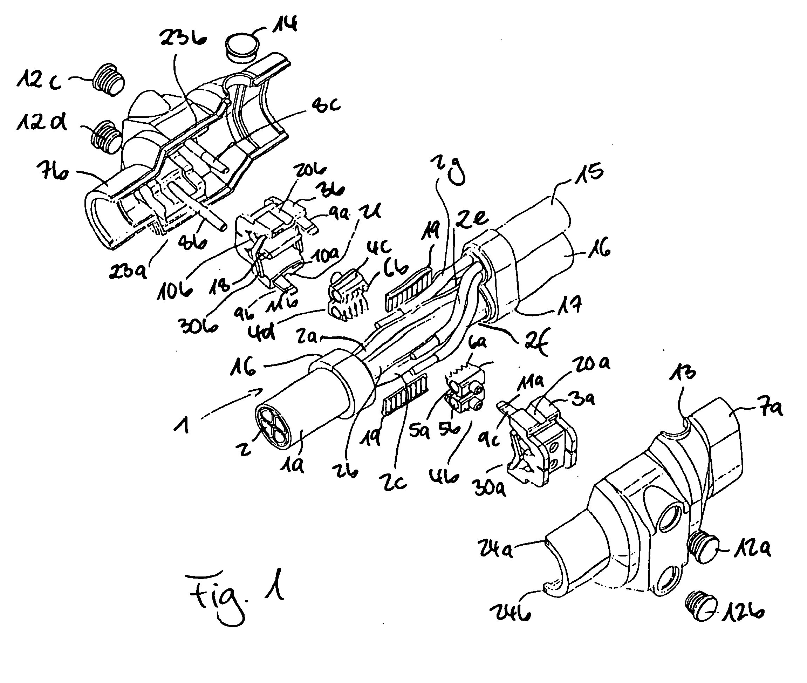

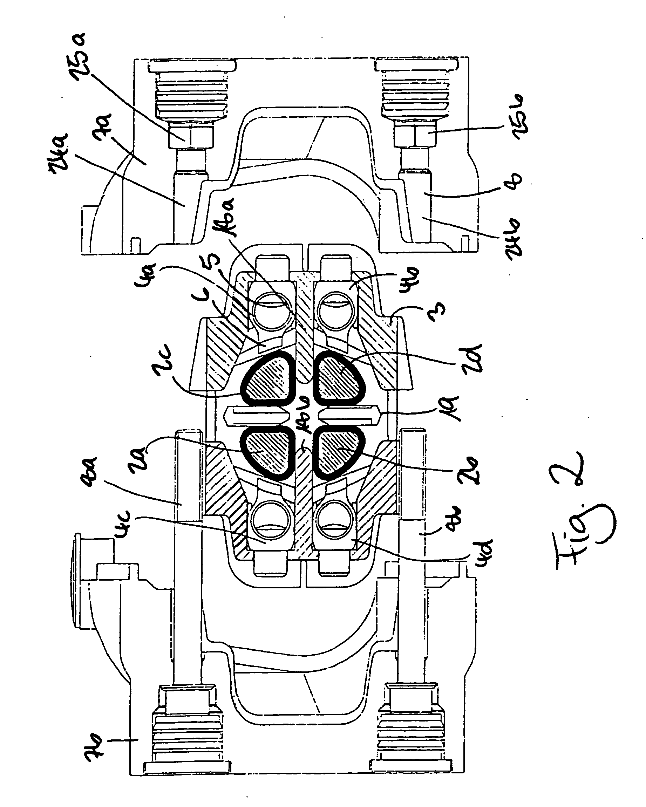

Die vorliegende Erfindung wird im Folgenden ausführlicher anhand eines Ausführungsbeispiels unter Bezugnahme auf die Figuren 1 und 2 erläutert.

Fig. 1 zeigt eine Explosionsdarstellung der Abzweigklemme der vorliegenden Erfindung.

Fig. 2 zeigt einen Querschnitt durch ein Energieversorgungskabel mit einer angebrachten Abzweigklemme der vorliegenden Erfindung in einem Zustand vor der Kontaktierung der Leiter des Energieversorgungskabels.

In Fig. 1 ist mittig ein Energieversorgungskabel bzw. Hauptkabel 1 dargestellt, das einen Kabelmantel aus Kunststoffisolierung aufweist. Weiterhin ist ein anzuschließender Abzweigleiter 15 dargestellt. Das mehradrige Energieversorgungskabel 1 weist isolierte Leiter 2a, 2b, 2c, 2d, in der Regel mit einem im Wesentlichen gleichen Abstand zur Längsachse des Energieversorgungskabels 1, auf.

Weiterhin sind die Bestandteile einer erfindungsgemäßen Abzweigklemme dargestellt. Das aus zwei Teilen 3a, 3b bestehende Führungsgehäuse 3 aus einem isolierenden Material ist so ausgelegt, dass die aufeinander zu weisenden jeweiligen Innenflächen eine Profilierung bzw. Gestaltung aufweisen, welche an die Außenprofilierung bzw. Außengestaltung von Kontaktierelementen 4a, 4b bzw. 4c, 4d angepasst ist. Je Gehäuseteil 3a, 3b ist ein Paar von Kontaktierelementen 4a, 4b bzw. 4c, 4d vorgesehen. Die Innenfläche der Gehäuseteile 3a, 3b entspricht damit der Außenfläche der Kontaktierelemente 4a bis 4d und ermöglicht eine exakte Aufnahme der Kontaktierelemente 4a bis 4d durch die Gehäuseteile 3a, 3b, wie dies noch nachfolgend näher beschrieben ist. Die Zuordnung der Gehäuseteile 3a, 3b mit den darin eingesetzten Kontaktierelementen 4a usw. ist derart getroffen, dass die beiden Teile des Führungsgehäuses 3 per Hand nur bis zu einem definierten Abstand zusammenfügbar sind. Dadurch kann beim Zusammenfügen z.B. per Hand keine Kontaktierung einer der Adern bzw. Leiter 2a, 2b, 2c, 2d durch die Kontaktierelemente 4a usw. bzw. deren Kontaktzähne oder Kontaktschneiden 6a, 6b erfolgen. In jedem Gehäuseteil 3a, 3b des Führungsgehäuses 3 befindet sich jeweils ein Paar der Kontaktierelemente 4a, 4b bzw. 4c, 4d zur Kontaktierung der Leiter 2a, 2b, 2c, 2d des Energieversorgungskabels 1 bzw. des Hauptkabels 1. Die Kontaktierung der Leiter 2a, 2b usw. erfolgt durch Zusammenpressen der einander gegenüberliegenden Paare von Kontaktierelementen 4a, 4b bzw. 4c, 4d entlang einer gemeinsamen Achse unter Erfassung der Leiter 2a, 2b, 2c, 2d, wie dies nachfolgend noch beschrieben ist.

Die Kontaktierelemente 4a, 4b, 4c, 4d sind jeweils beispielsweise mit zwei Anschlüssen 5a, 5b in Form von vorzugsweise Kabelklemmen für jeweils ein abisoliertes Ende eines Leiters 2e, 2f, 2g, 2h des allgemein mit 15 bezeichneten Abzweigkabels versehen. Zur Herstellung eines Kontaktes mit den Kontaktierelementen 4a, 4b, 4c, 4d werden die abisolierten Enden der einzelnen Abzweigleiter 2e, 2f in die Klemmenanschlüsse 5a, 5b der Kontaktierelemente 4a, 4b eingeführt und verklemmt. Entsprechendes gilt für die Kontaktierelemente 4c, 4d und die Abzweigleiter 2g, 2h.

Wie sich Fig. 1 entnehmen lässt, sind die Kontaktierkörper 4a, 4b, 4c, 4d auf der zu den Leitern 2a, 2b, 2c, 2d gerichteten Seite mit Zähnen, Kontaktschneiden 6 oder dergleichen versehen, die im Falle eines Aufpressens der Kontaktierelemente 4a, 4b, 4c, 4d auf die zugehörigen Leiter 2a, 2b, 2c, 2d, die die Leiter umgebende Isolierung durchdringen, wie dies nachfolgend noch beschrieben ist.

Entsprechend der Ausführungsformen nach Fig. 1 und 2 weist die erfindungsgemäße Kabelklemme in an sich bekannter Weise zwei Muffengehäuseteile 7a, 7b auf, deren Formgebung bezüglich der Innenflächen jeweils so ausgelegt ist, dass sie weitgehend exakt an die Formgebung der Außenflächen der Gehäuseteile 3a, 3b angepasst sind. Damit wird bei einer bevorzugten Ausführungsform der erfindungsgemäßen Abzweigklemme erreicht, dass zum einen jedes Kontaktierelement 4a, 4b, 4c, 4d in dem zugehörigen Gehäuseteil 3a, 3b vorzugsweise in Passsitz angeordnet wird, und bei einer weiteren Ausführungsform der erfindungsgemäßen Abzweigklemme kann erreicht werden, dass die Gehäuseteile 3a, 3b in den jeweiligen Muffengehäuseteilen 7a, 7b vorzugsweise mit Passsitz angeordnet werden können. Auf diese Weise ist gewährleistet, dass eine passgenaue Anordnung der die Abzweigklemme bildenden Teile erreicht wird und ein Verkanten der Teile beim Zusammenbauen ausgeschlossen ist.

Zur Verbindung der Muffengehäuseteile 7a, 7b sind Schraubmittel 8a, 8b vorgesehen, die gegenüber der Achse des Hauptkabels 1 seitlich versetzt angeordnet sind, derart, dass die Schraubmittel 8a, 8b im zusammengebauten Zustand der Abzweigklemme seitlich sämtlicher Leiter 2a bis 2h verlaufen, und zwar in einem solchen Abstand zueinander, dass während des Zusammenbaus, das heißt während des Verschraubens der Muffengehäuseteile 7a, 7b eine Beschädigung der Isolierung der Leiter 2a bis 2h ausgeschlossen ist.

Bei der dargestellten Ausführungsform sind die Gehäuseteile 3, 3b weiterhin so konzipiert, dass sie die Leiter 2a bis 2h außenseitig nahezu vollständig umschließen, sobald die Gehäuseteile 3a, 3b komplett zusammengefügt sind, und die Schraubmittel 8a, 8b verlaufen dabei außerhalb oder an der Seite der Gehäuseteile 3a, 3b und stehen mit nicht weiter dargestellten Muttern, die von der Seite des Muffengehäuseteils 7a eingesetzt werden, in fester Beziehung. Die Schraub- oder Befestigungsmittel 8a, 8b sind vorzugsweise Schrauben, die von außerhalb des Muffengehäuses 7 beispielsweise mittels Muttern festgezogen werden können.

Wie aus vorstehenden Ausführungen hervorgeht, dienen die Gehäuseteile 3a, 3b als Führungsgehäuse für die Kontaktierelemente 4a, 4b, 4c, 4d während des Einsetzens der erfindungsgemäßen Abzweigklemme, das heißt mittels der Muffengehäuseteile 7a, 7b werden die Gehäuseteile 3a, 3b zusammen mit den Kontaktierelementen 4a, 4b, 4c, 4d entlang einer gemeinsamen Achse verlagert und auf die Leiter 2a bis 2d aufgesetzt, bis die Zähne oder Schneiden 6a, 6b die Isolierungen der betreffenden Leiter 2a bis 2d durchdringen und mit den Leitern in elektrischen Kontakt gelangen. Die Kontaktierelemente 4a, 4b, 4c, 4d bestehen ersichtlicherweise aus Metall und befinden sich zwischen einem der Abzweigleiter 2e bis 2h und einem der Leiter 2a bis 2d des Hauptkabels 1.

Bei einer weiteren Ausführungsform sind die Gehäuseteile 3a, 3b seitlich mit vorzugsweise halbzylindrischen Führungsschlitzen 20a, 20b versehen, die dazu dienen, die Schraubmittel 8a, 8b an den Gehäuseteilen 3a, 3b seitlich geführt einsetzen zu können. Die Gehäuseteile 3a, 3b sind miteinander identisch ausgebildet, das heißt, die Stege oder Zapfen 9a, 9b liegen diametral einander gegenüber ebenso wie die Aufnahmeschlitze oder Nuten 10a, 10b, wie dies in Bezug auf das Gehäuseteil 3b in Fig. 1 gezeigt ist.

Die beiden Teile 3a, 3b des Führungsgehäuses 3 weisen vorzugsweise zu dem jeweiligen anderen Teil des Führungsgehäuses passende Zapfen 9 und Führungen 10 auf, die eine verwindungs- und verdrehungsfreie Zusammenfügung der Führungsgehäuseteile 3 gewährleisten. Bevorzugt weist jedes der beiden Führungsgehäuseteile zwei Zapfen und zwei Führungen auf.

Die beiden Gehäuseteile 3a, 3b weisen zudem vorzugsweise jeweils eine Spreizschiene 18 auf, um das Aufsetzen der Führungsgehäuseteile 3 auf die Leiter 2 des Energieversorgungskabels 1 zu erleichtern. Beim Aufsetzen der Gehäuseteile 3a, 3b können zur weiteren Erleichterung und zur Aufspreizung der Leiter 2 senkrecht zu den Ebenen der Spreizschienen 18 Spreizkeile 19 zwischen die isolierten Leiter 2a bis 2d eingefügt werden.

Die Spreizkeile 19 können nach Aufsetzen der Gehäuseteile 3a, 3b dort verbleiben oder wieder entfernt werden.

Vorzugsweise weist jedes der beiden Gehäuseteile 3a, 3b zwei Zapfen oder Stege 9a, 9b, 9c und zwei dazu passende Aufnahmeschlitze 10a, 10b, 10d oder dergleichen auf. Die Zusammenfügung der Gehäuseteile 3a, 3b kann jedoch auch durch andere dem Fachmann geläufige Mittel erreicht werden.

Vorzugsweise weist jeder Zapfen 9a, 9b jeweils einen mechanischen Widerstand 11 auf, der in Form eines Steges oder Absatzes ausgestaltet ist und der nur durch Ausüben einer vorgegebenen Kraft überwindbar ist. Dadurch kann ein Mindestabstand der Gehäuseteile 3 und insbesondere der Kontaktschneiden 6 voneinander aufrechterhalten werden. Dieser mechanische Widerstand ist vorzugsweise so ausgestaltet, dass er per Hand nicht überwindbar ist, so dass keine Gefahr besteht, mit den Kontaktschneiden 6 die Isolierungen der Adern 2 zu durchdringen. Dies ist insbesondere bei warmen Außentemperaturen von besonderem Vorteil, wenn die Isolierung der Leiter 2 aus Kunststoff aufgeweicht ist, so dass sie besonders leicht durch Kontaktschneiden 6 durchdringbar wären.

Vorzugsweise sind die Befestigungselemente 8 zur Befestigung der beiden Teile 7a, 7b des Muffengehäuses 7 Schrauben, die mit Muttern festziehbar sind. Vorzugsweise ist erst bei diesem Festziehen der durch den mechanischen Widerstand 11 vorgegebene Abstand verringerbar. Der mechanische Widerstand 11 kann beispielsweise so ausgestaltet sein, dass beim Zusammenziehen der Schrauben ein Mindest-Drehmoment überwunden werden muss.

Dies bietet den besonderen Vorteil, dass die Person, die den Abzweigleiter auf das unter Spannung stehende Hauptkabel 1 aufbringt, zunächst die Gehäuseteile 3a, 3b sicher ohne persönliche Schutzausrüstung aufbringt und anschließend die Muffengehäuseteile 7a, 7b aufsetzt und mit den Befestigungselementen 8a, 8b gegeneinander festzieht. Beispielsweise kann mit einem Drehmomentschlüssel das notwendige Drehmoment zur Überwindung des mechanischen Widerstands eingestellt werden, so dass die den Abzweigleiter anbringende Person genau darüber in Kenntnis ist, wann ein Kontakt zu den Metallleitern 2a, 2b, 2c, 2d des Energieversorgungskabels 1 hergestellt ist.

Bei einer bevorzugten Ausführungsform ist das Muffengehäuse mit Öffnungen 22 für die Befestigungselemente 8 und Abdichteinrichtungen oder Verschlüssen 12, z.B. Abdichtstopfen, zum Verschließen der Öffnungen 22 versehen. Vorzugsweise weist das Muffengehäuse weiterhin eine Einfüllöffnung 13 zum Einfüllen eines isolierenden Materials auf, die durch einen Verschluss 14 verschließbar und abdichtbar ist. Das Muffengehäuse 7 ist vorzugsweise so ausgestaltet, dass es weitgehend vollständig befüllbar ist.

Um ein Auslaufen des isolierenden Materials zu verhindern, können die beiden Muffengehäuseteile 7a, 7b an deren Verbindungsbereich so ausgestaltet sein, dass ein Muffengehäuseteil 7b einen vorstehenden Führungsbereich 23a, 23b aufweist, und das andere Muffengehäuseteil 7a einen passgenauen Bereich in Form eines Schlitzes 24a, 24b zur Aufnahme dieses vorstehenden Wand- oder Führungsbereichs des anderen Muffengehäuseteils 7b aufweist.

Fig. 2 zeigt den Zustand der erfindungsgemäßen Abzweigklemme nach Aufbringen der Gehäuseteile 3a, 3b und Aufbringen der Muffengehäuseteile 7a, 7b. Nach Fig. 2 sind die Muffengehäuseteile 7a, 7b noch nicht durch die Befestigungselemente 8 derart fest miteinander verbunden, dass der durch die Gehäuseteile 3a, 3b mittels Stege 11a, 11b gebildete Widerstand überwunden ist. In Fig. 2 sind Leiter 2a, 2b, 2c, 2d des Energieversorgungskabels 1 einerseits durch Spreizschienen 18 und andererseits durch Spreizkeile 19 positioniert.

Die Spreizschienen 18 sind entsprechend der Ausführungsform nach Fig. 1 und 2 Teile der Gehäuseteile 3a, 3b und verlaufen parallel zur Achse des Hauptkabels und stellen zugleich eine Isolierung zwischen den zueinander benachbarten Leitern 2a, 2b bzw. 2c, 2d dar.

Wie aus den Fig. 1 und 2 ersichtlich ist, sind die Kontaktierelemente 4a, 4b, 4c, 4d jeweils paarweise in den Gehäuseteilen 3a, 3b vorgesehen, das heißt, im Gehäuseteil 3a befinden sich zwei Kontaktierelemente 4a, 4b und im Gehäuseteil 3b zwei Kontaktierelemente 4c und 4d, wobei die Kontaktierelemente 4a, 4b jeweils durch den Isoliersteg 18a bzw. 18b elektrisch voneinander getrennt sind. Die Isolierschiene bzw. der Isoliersteg 18a, 18b ist somit Bestandteil des jeweiligen Gehäuseteils 3a bzw. 3b.

Wie aus Fig. 2 hervorgeht, werden die Gehäuseteile 3a, 3b mit den in sie eingesetzten Kontaktierelementen 4a bis 4d unter Umschließung sämtlicher Leiter 2a bis 2h in Richtung aufeinander zu bewegt, vorzugsweise bis zu einem Punkt, an welchem ein durch die Widerstandselemente 11a, 11b erzeugter Widerstand auftritt, der vorzugsweise durch die von Hand vorzunehmende Zusammenfügung nicht überwunden werden kann. Dieser Zusammenbauzustand ist in Fig. 2 gezeigt. Anschließend werden die Muffengehäuseteile 7a, 7b über die Gehäuseteile 3a, 3b gesetzt, die Schraubmittel 8a, 8b greifen dann in entsprechende Aufnahmebohrungen 24a, 24b. Durch ein weiteres Zusammenfügen der Muffengehäuseteile 7a, 7b wird erreicht, dass die Schraubmittel 8a, 8b mit zugehörigen Muttern 25a, 25b in Eingriff gelangen, wonach die Schraubmittel 8a, 8b in die Muttern 25a, 25b vorzugsweise unter Zuhilfenahme eines Drehmomentschlüssels eingedreht werden unter Überwindung des bei einer bevorzugten Ausführungsform vorgesehenen Widerstands, der wie beschrieben durch die Widerstandselemente 11a, 11b erzeugt wird. Während des weiteren Zusammenschraubens und Verbindens der Muffengehäuseteile 7a, 7b dringen die Kontaktierelemente 4a bis 4d in die jeweils zugehörigen Leiter 2a bis 2d unter Durchdringen der diese umgebenden Isolierschicht ein und stellen den Kontakt zwischen jeweils einem der Leiter 2a bis 2d und dem Kontaktierelement 4a bis 4d bzw. dem betreffenden Abzweigleiterelement 2e bis 2h her.

Nach beendetem Zusammenbau der Abzweigklemme und der festen Verbindung der Muffengehäuseteile 7a, 7b werden vorzugsweise diejenigen Öffnungen, innerhalb welcher die Schraubmittel 8a, 8b bzw. Muttern 25a, 25b liegen, durch Stopfen 12a, 12b, 12c, 12d abgeschlossen und es erfolgt das Einbringen eines flüssigen Isoliermaterials über die Öffnung 13, die anschließend ebenfalls mittels eines Stopfens 14 verschlossen werden kann.

Bei einer bevorzugten Ausführungsform der Kabelabzweigklemme sind seitlich an den Teilen 3a, 3b des Führungsgehäuses drei etwa v-förmig verlaufende Stege 30a bzw. 30b vorgesehen, wobei in Fig. 1 nur jeweils einer dieser Stege erkennbar ist, die Stege aber beidseitig jedes Teils 3a, 3b angeordnet sind. Diese Stege 30a, 30b sind vorzugsweise an den nicht weiter bezeichneten Seitenschenkeln jedes Teils 3a, 3b angeformt, welche die Führungsnut 20a bzw. 20b sowie die Zapfen 9a bzw. 9b und die zugehörigen Führungen 10a, 10b beinhalten. Die Stege 30a, 30b können zweiteilig ausgeführt sein und im Bereich der aneinander stoßenden Enden seitlich der Rippe 18 unterbrochen sein. Diese Stege 30a, 30b einteiliger oder jeweils zweiteiliger Art dienen dazu, ein einseitiges Aufsetzen der Teile 3a, 3b mit den integriert vorgesehenen Kontaktierelementen 4a, 4b usw. zu vermeiden und liegen beim Zusammenschrauben der Muffenabschnitte 7a, 7b an den Adern 2a, 2b usw. an. Die Stege 30a, 30b werden im Verlaufe des Zusammenbauens abgebrochen, wobei die Teile 3a, 3b gleichmäßig auf die Leiter 2a, 2b usw. aufgesetzt werden ohne Beschädigung der Isolierungen der Leiter 2a, 2b usw. Bei dieser Ausführungsform wird somit gewährleistet, dass die Teile 3a, 3b zuerst so weit zusammengesetzt werden, bis der Widerstand durch die Widerstandselemente 11a, 11b ein weiteres Zusammenbauen von Hand verhindert. Ab diesem Zeitpunkt liegen die Stege 30a, 30b beidseitig jedes Teils 3a, 3b gleichmäßig auf den Leitern 2a, 2b usw. auf und gewährleisten dann beim Anziehen der Schraubmittel 8a, 8b ein gleichmäßiges Aufsetzen der Kontaktierelemente 4a, 4b usw. auf die einzelnen Leiter.

### Bezugszeichenliste

- 1: Energieversorgungskabel
- 2: Adern des Energieversorgungskabels
- 3: Zweiteiliges Führungsgehäuse
- 4: Kontaktkörper
- 5: Anschluss
- 6: Kontaktelemente
- 7: Zweiteiliges Muffengehäuse
- 8: Befestigungselemente
- 9: Zapfen
- 10: Führung
- 11: mechanischer Widerstand
- 12: Abdichteinrichtungen, Verschluss
- 13: Einfüllöffnung
- 14: Abdichteinrichtung, Verschluss für Einfüllöffnung
- 15: Abzweigleiter
- 16: Kabelabdichtung Energieversorgungskabel
- 17: Kabelabdichtung Energieversorgungskabel und Abzweigleiter
- 18: Spreizschiene
- 19: Spreizkeil
- 20: Öffnung Befestigungselemente

## Patentansprüche

1. Kabelabzweigklemme für ein mehradriges Energieversorgungskabel (1), mit einem zweiteiligen Gehäuse (3a, 3b) zur Aufnahme von mindestens einem Kontaktierelement (4a, 4b, 4c, 4d), wobei jedes Kontaktierelement (4a, 4b, 4c, 4d) Klemmen (5) zur Aufnahme abisolierter Enden von Abzweigleitern (2e, 2f, 2g, 2h) aufweist sowie Kontaktzähne (6) oder dergleichen, und
mit einem zweiteiligen Muffengehäuse (7a, 7b) zur Aufnahme der Gehäuseteile (3a, 3b) und zum Umschließen vorbestimmter Endabschnitte des Energieversorgungskabels und Abzweigkabels (1a, 1b, 15),
**dadurch gekennzeichnet,**
**dass** jedes Gehäuseteil (3a, 3b) eine profilierte Innenfläche aufweist, die zur passgerechten Aufnahme der Kontaktierelemente (4a, 4b, 4c, 4d) der Außenfläche der Kontaktierelemente (4a, 4b, 4c, 4d) entspricht,
**dass** jedes Gehäuseteil (3a, 3b) mit dem anderen Gehäuseteil zugeordneten Führungseinrichtungen (9, 10) zum passgerechten Verbinden der Gehäuseteile (3a, 3b) versehen ist, wobei die Führungseinrichtungen (9, 10) durch Führungsstege (9a, 9b) und Führungsschlitze (10a, 10b) ausgebildet sind, derart, dass die Führungseinrichtungen (9, 10) ein Zusammenfügen der beiden Gehäuseteile (3a, 3b) nur bis zu einem vorbestimmten Abstand, der durch einen Widerstand der Führungseinrichtungen (9, 10) definiert ist gestatten in einem Zustand, in welchem die Kontaktzähne (6) die Aderisolation des Energieversorgungskabels noch nicht durchdringen,
**dass** das Muffengehäuse (7a, 7b) gegenüber der Achse des Hauptkabels (1) versetzte Schraubmittel (8) aufweist, die bei verschraubtem Muffengehäuse seitlich am Hauptkabel (1) und den Abzweigleitern (2e, 2f, 2g, 2h) angeordnet sind, so dass erst durch Aufbringen des zweiteiligen Muffengehäuses der Widerstand mittels der Verschraubung der Muffengehäuseteile (7a, 7b) mittels der Schraubmitteln (8) überwunden und die beiden Gehäuseteile (3a, 3b) vollständig gegeneinander gedrückt werden, wodurch die Kontaktzähne (6) die Isolierungen der Adern des Energieversorgungskabels durchdringen und einen elektrischen Kontakt zu den Leitern des Hauptkabels (1) herstellen.

2. Kabelabzweigklemme nach Anspruch 1,
**dadurch gekennzeichnet,**
**dass** jedes Gehäuseteil (3a, 3b) teilzylindrische Führungsschlitze (20, 21) für die Schraubmittel (8) aufweist.

3. Kabelabzweigklemme nach einem der vorangehenden Ansprüche,
**dadurch gekennzeichnet,**
**dass** jedes Muffengehäuseteil (7a, 7b) eine an die Außenprofilierung der Gehäuseteile (3a, 3b) angepasste Innenprofilierung aufweist.

4. Kabelabzweigklemme nach einem der vorhergehenden Ansprüche,
**dadurch gekennzeichnet,**
**dass** das Muffengehäuse (7a, 7b) Abdichteinrichtungen (12) zur Abdichtung der Öffnungen (20) für die Befestigungselemente (8) aufweist.

5. Kabelabzweigklemme nach einem der vorhergehenden Ansprüche,
**dadurch gekennzeichnet,**
**dass** das Muffengehäuse (7) weitgehend vollständig mit einem isolierenden Material befüllbar ist.

6. Kabelabzweigklemme nach einem der vorhergehenden Ansprüche,
**dadurch gekennzeichnet,**
**dass** das Muffengehäuse (7) eine Einfüllöffnung (13) zum Einfüllen eines isolierenden Materials aufweist.

7. Kabelabzweigklemme nach wenigstens einem der vorangehenden Ansprüche,
**dadurch gekennzeichnet,**
**dass** die Gehäuseteile (3a, 3b) seitlich angeformte Stegabschnitte (30a, 30b) aufweisen.

## Claims

1. Cable tapping clamp for a multiwire power supply cable (1), comprising:
a two-part housing (3a, 3b) for receiving at least one contacting element (4a, 4b, 4c, 4d), each contacting element (4a, 4b, 4c, 4d) being provided with clamps (5) for receiving bared ends of tapping conductors (2e, 2f, 2g, 2h) and contact teeth (6) or the like, and
a two-part joint box (7a, 7b) for receiving the housing parts (3a, 3b) and for enclosing predetermined end portions of the power supply cable and tapping cable (1 a, 1b, 15),
**characterized in**
**that** each housing part (3a, 3b) has a profiled inner surface in correspondence with the outer surface of the contacting elements (4a, 4b, 4c, 4d) as to receive the contacting elements (4a, 4b, 4c, 4d) in a manner true to size,
**that** each housing part (3a, 3b) is provided with guiding means (9, 10) associated with the other housing part for connecting the housing parts (3a, 3b) in a manner true to size, wherein the guiding means (9, 10) are formed by guiding webs (9a, 9b) and guiding slots (10a, 10b) such that the guiding means (9, 10) allow the two housing parts (3a, 3b) to be joined only up to a predetermined distance defined by a resistance of the guiding means (9, 10) in a state in which the contact teeth (6) do not yet penetrate the wire insulation of the power supply cable,
**that** the joint box (7a, 7b) comprises screwing means (8) offset with respect to the axis of the main cable (1) and arranged on the side of the main cable (1) and the tapping conductors (2e, 2f, 2g, 2h) when the joint box is screwed together, so that only by mounting the two-part joint box the resistance is overcome by screwing the joint box parts (7a, 7b) together with the screwing means (8) and by pressing the two housing parts (3a, 3b) completely against each other so that the contact teeth (6) penetrate the insulations of the wires of the power supply cable and produce an electric contact to the conductors of the main cable (1).

2. Cable tapping clamp according to claim 1,
**characterized in that**
each housing part (3a, 3b) comprises partially cylindrical guiding slots (20, 21) for the screwing means (8).

3. Cable tapping clamp according to one of the preceding claims,
**characterized in that**
each joint box part (7a, 7b) has an inner profiling adapted to the outer profiling of the housing parts (3a, 3b).

4. Cable tapping clamp according to one of the preceding claims,
**characterized in that**
the joint box (7a, 7b) comprises sealing devices (12) for sealing the openings (20) for the fixing elements (8).

5. Cable tapping clamp according to one of the preceding claims,
**characterized in that**
the joint box (7) can nearly completely be filled with an insulating material.

6. Cable tapping clamp according to one of the preceding claims,
**characterized in that**
the joint box (7) comprises a filling hole (13) for filling in an insulating material.

7. Cable tapping clamp according to at least one of the preceding claims,
**characterized in that**
the housing parts (3a, 3b) comprise web sections (30a, 30b) formed on the side.

## Revendications

1. Borne de dérivation pour un câble d'alimentation électrique (1) multifilaire, comprenant un boîtier (3a, 3b) en deux parties pour le logement d'au moins un élément de contact (4a, 4b, 4c, 4d), chaque élément de contact (4a, 4b, 4c, 4d) présentant des bornes (5) pour la réception d'extrémités dénudées de conducteurs de dérivation (2e, 2f, 2g, 2h) et des dents de contact (6) ou similaires, et
une boîte de jonction (7a, 7b) en deux parties pour le logement des parties de boîtier (3a, 3b) et pour l'enfermement de parties d'extrémité prédéfinies du câble d'alimentation électrique et du câble de dérivation (1a, 1b, 15),
**caractérisée en ce que**
chaque partie de boîtier (3a, 3b) présente une surface intérieure profilée qui correspond à la réception ajustée des éléments de contact (4a, 4b, 4c, 4d) de la surface extérieure des éléments de contact (4a, 4b, 4c, 4d),
**en ce que** chaque partie de boîtier (3a, 3b) est dotée de dispositifs de guidage (9, 10) adaptés à l'autre partie de boîtier pour la liaison adaptée des parties de boîtier (3a, 3b), les dispositifs de guidage (9, 10) étant réalisés par des barrettes de guidage (9a, 9b) et des fentes de guidage (10a, 10b) de telle sorte que les dispositifs de guidage (9, 10) permettent un assemblage des deux parties de boîtier (3a, 3b) seulement jusqu'à une distance prédéfinie, qui est définie par une résistance des dispositifs de guidage (9, 10), dans un état où les dents de contact (6) ne traversent pas encore l'isolation de fil du câble d'alimentation électrique,
**en ce que** la boîte de jonction (7a, 7b) présente des moyens de vissage (8) décalés par rapport à l'axe du câble principal (1), qui sont disposés sur le côté du câble principal (1) et des conducteurs de dérivation (2e, 2f, 2g, 2h) lorsque la boîte de jonction est vissée, de sorte que la résistance est surmontée au moyen du raccord vissé des parties de la boîte de jonction (7a, 7b) à l'aide des moyens de vissage (8) et les deux parties de boîtier (3a, 3b) sont appuyées complètement l'une contre l'autre seulement après l'application de la boîte de jonction en deux parties, de sorte que les dents de contact (6) traversent les isolations des fils du câble d'alimentation électrique et établissent une liaison électrique avec les conducteurs du câble principal (1).

2. Borne de dérivation selon la revendication 1,
**caractérisée en ce que**
chaque partie de boîtier (3a, 3b) présente des fentes de guidage (20, 21) partiellement cylindriques pour les moyens de vissage (8).

3. Borne de dérivation selon l'une quelconque des revendications précédentes,
**caractérisée en ce que**
chaque partie de boîte de jonction (7a, 7b) présente un profilage intérieur adapté au profilage extérieur des parties de boîtier (3a, 3b).

4. Borne de dérivation selon l'une quelconque des revendications précédentes,
**caractérisée en ce que**
la boîte de jonction (7a, 7b) présente des dispositifs d'étanchéité (12) pour l'étanchéité des ouvertures (20) pour les éléments de fixation (8).

5. Borne de dérivation selon l'une quelconque des revendications précédentes,
**caractérisée en ce que**
la boîte de jonction (7) peut être remplie complètement avec un matériau isolant.

6. Borne de dérivation selon l'une quelconque des revendications précédentes,
**caractérisée en ce que**
la boîte de jonction (7) présente une ouverture de remplissage (13) pour le versement d'un matériau isolant.

7. Borne de dérivation selon l'une quelconque des revendications précédentes,
**caractérisée en ce que**
les parties de boîtier (3a, 3b) présentent des parties de barrette (30a, 30b) formées sur le côté.
